# EUROPÄISCHE PATENTSCHRIFT

(11) **EP 1 183 299 B1**
(45) Veröffentlichungstag und Bekanntmachung des Hinweises auf die Patenterteilung: **18.12.2002**
(21) Anmeldenummer: 00931199.4
(22) Anmeldetag: 12.05.2000
(51) Int. Cl.: C08G 69/10, C08G 69/48

(54) **ALKOXYLIERTE, KONDENSIERTE BASISCHE AMINOSÄUREN ENTHALTENDE POLYMERE UND VERFAHREN ZU IHRER HERSTELLUNG**
POLYMERS THAT CONTAIN ALCOXYLATED, CONDENSED ALKALINE AMINO ACIDS AND METHOD OF PRODUCING SAID POLYMERS
POLYMERES ALKOXYLES CONTENANT DES ACIDES AMINES BASIQUES CONDENSES, ET PROCEDE DE PREPARATION

(30) Priorität: 19.05.1999 US 314116
(43) Veröffentlichungstag der Anmeldung: 06.03.2002
(73) Patentinhaber: BASF AKTIENGESELLSCHAFT, 67056 Ludwigshafen (DE)
(72) Erfinder: MOHR, Bernhard, D-69124 Heidelberg (DE); BOECKH, Dieter, D-67117 Limburgerhof (DE); BORZYK, Oliver, D-67346 Speyer (DE)
(86) Internationale Anmeldenummer: EP0004293
(87) Internationale Veröffentlichungsnummer: WO00071601

(56) Entgegenhaltungen:
- EP-A- 0 112 593
- EP-A- 0 980 862
- WO-A-97/20879
- WO-A-99/07813
- DATABASE WPI Section Ch, Week 198001 Derwent Publications Ltd., London, GB; Class A21, AN 1980-01032C XP002144882 & JP 54 148898 A (ASAHI CHEM IND CO LTD), 21. November 1979 (1979-11-21)

## Beschreibung

### Technisches Gebiet

Die vorliegende Erfindung betrifft alkoxylierte, kondensierte basische Aminosäuren enthaltende Polymere und ein Verfahren zu ihrer Herstellung.

### Stand der Technik

Ethoxylierte Polyamine und insbesondere Polyethylenimine und Verfahren zu ihrer Herstellung sind bekannt, siehe US-PS 3,313,736, US-PS 4,891,160, US-PS 4,551,506 und WO-A-97/23546. Die ethoxylierten Polyamine werden beispielsweise in Reinigungszusammensetzungen verwendet.

Aus DE-A-2 227 546 ist die Verwendung von alkoxylierten Polyalkyleniminen zur Entwässerung von Rohölen bekannt. Die alkoxylierten Polyalkylenimine werden nach einem zweistufigen Verfahren hergestellt, bei dem man in der ersten Stufe ein Mol eines Alkylenoxids, bezogen auf ein Mol NH-Gruppen im Polyethylenimin, in Gegenwart von Wasser mit einem Polyalkylenpolyamin unter Bildung von Hydroxyalkylgruppen umsetzt. In der zweiten Verfahrensstufe wird zunächst Wasser aus dem Reaktionsgemisch entfernt, ein alkalischer Katalysator zugesetzt, Alkylenoxid aufgepreßt und die Reaktion bei Temperaturen zwischen 125° und 135°C unter Druck durchgeführt. Pro NH-Gruppe lagert man 10 bis 300 Alkylenoxideinheiten an. Die Alkoxylierung kann jedoch auch einstufig durchgeführt werden, indem man in Gegenwart von wasserhaltigen oder wasserfreien alkalischen Katalysatoren Alkylenoxid aufpreßt und bei Temperaturen zwischen 125 und 135°C unter Druck mit Polyethyleniminen zur Reaktion bringt.

Aus EP-A-0,112,593 sind Detergensformulierungen bekannt, die ethoxylierte Amine enthalten. Die Herstellung der alkoxylierten Amine erfolgt dabei ebenfalls in zwei Stufen, wobei man in der ersten Stufe durch Einwirkung von Ethylenoxid ein hydroxyethyliertes Polyethylenimin und in der zweiten Stufe durch weitere Addition von Ethylenoxid bei Temperaturen von 130 bis 140°C unter erhöhtem Druck die erforderliche Menge an Ethylenoxid anlagert. Der Ethoxylierungsgrad beträgt beispielsweise 15 bis 42.

WO-A-97/20879 betrifft ein Verfahren zur Herstellung von hydroxyalkylierten Polyethyleniminen durch Hydroxyalkylierung von Polyethyleniminen in einer oder zwei Verfahrensstufen zu Reaktionsprodukten, die 1 bis 200 Mol Alkylenoxidgruppen pro NH-Gruppe im Polyethylenimin enthalten. Bei einstufiger Verfahrensführung werden wasserfreie Polyethylenimine und 1 bis 200 Mol-%, bezogen auf die Polyethylenimine, mindestens einer wasserfreien Base vorgelegt oder wäßrige Lösungen dieser Stoffe entwässert und nach dem Entfernen des gesamten Wassers bei Temperaturen von mehr als 135 bis 150°C mit mindestens einem Alkylenoxid umgesetzt. Alternativ dazu setzt man bei zweistufiger Verfahrensführung in der ersten Stufe Polyethylenimin bei Temperaturen von 80 bis 100°C mit 0,7 bis 0,9 Mol, bezogen auf ein Mol NH-Gruppen im Polymerisat, mindestens eines Alkylenoxids in wäßriger Lösung und in der zweiten Verfahrensstufe das im ersten Schritt erhaltene Reaktionsprodukt in Gegenwart von 1 bis 20 Mol-%, bezogen auf Polyethylenimin, eines alkalischen Katalysators in Abwesenheit von Wasser bei Temperaturen von 120 bis 150°C mit mindestens einem Alkylenoxid zu hydroxyalkylierten Polyethyleniminen, die 1 bis 200 Mol Alkylenoxidgruppen pro NH-Gruppe im Polyethylenimin enthalten, um. Die erhaltenen alkoxylierten Produkte sind nur gering gefärbt.

WO-A-99/07814 betrifft ein auf einer Aminosäure basierendes Polymer, Oligomer oder Copolymer mit mindestens 5 Mol-% Einheiten einer basischen Aminosäure aus der Gruppe bestehend aus Lysin, Arginin, Ornithin, Tryptophan und deren Mischungen und mindestens etwa 5 Mol-% einer polymerisierbaren Verbindung aus der Gruppe bestehend aus aliphatischen oder cycloaliphatischen Aminen, alicyclischen Aminen, Diaminen, Triaminen, Tetraaminen, aliphatischen Aminoalkoholen oder deren Mischungen. Diese Polymere, Oligomere oder Copolymere werden durch Kondensation der basischen Aminosäuren bei einer Temperatur von mindestens 120°C mit mindestens einer der polymerisierbaren Verbindungen hergestellt. Die Kondensationsprodukte kommen zur Verwendung als Additive für Detergenzien und/oder andere Waschmittelzusätze in Betracht.

WO-A-99/07813 betrifft Kondensationsprodukte aus basischen Aminosäuren und copolymerisierbaren Verbindungen, die durch Kondensation von
(a) einer basischen Aminosäure aus der Gruppe bestehend aus Lysin, Arginin, Ornithin, Tryptophan und deren Mischungen,
(b) einer copolymerisierbaren Verbindung aus der Gruppe bestehend aus gesättigten einbasischen Carbonsäuren, ungesättigten einbasischen Carbonsäuren, mehrbasischen Carbonsäuren, Carbonsäureanhydriden, Diketenen, Monohydroxycarbonsäuren, Polyhydroxycarbonsäuren und deren Mischungen und gegebenenfalls
(c) mindestens einer Verbindung aus der Gruppe bestehend aus Aminen, Lactamen, nicht-proteinogenen Aminosäuren, Alkoholen, alkoxylierten Alkoholen, alkoxylierten Aminen, Aminozuckern, Kohlenhydraten und Zuckercarbonsäuren
in einem molaren Verhältnis (a) : (b) von 100 : 1 bis 1 : 1 bei einer Temperatur von mindestens 120°C erhältlich sind. Die Kondensationsprodukte können als Zusatz in Detergenzien verwendet werden.

Der Erfindung liegt die Aufgabe zugrunde, neue Kondensationsprodukte basischer Aminosäuren bereitzustellen.

### Kurze Darstellung der Erfindung

Die obige Aufgabe wird gelöst mit alkoxylierten, kondensierte basische Aminosäuren enthaltenden Polymeren, bei denen es sich um die Additionsprodukte von Alkylenoxiden an
- Homokondensate basischer Aminosäuren,
- Kondensate von Gemischen aus zwei oder mehr basischen Aminosäuren und
- Cokondensate aus basischen Aminosäuren und cokondensierbaren Verbindungen
handelt.

Die Aufgabe wird auch gelöst mit einem Verfahren zur Herstellung von alkoxylierten, kondensierten, basische Aminosäuren enthaltenden Polymeren, bei dem man
- Homokondensate basischer Aminosäuren,
- Kondensate von Gemischen aus zwei oder mehr basischen Aminosäuren und
- Cokondensate aus basischen Aminosäuren und cokondensierbaren Verbindungen
mit mindestens einem Alkylenoxid aus der Gruppe bestehend aus C2- bis C30-Alkylenoxiden und Styroloxid umsetzt. Die alkoxylierten, kondensierte basische Aminosäuren enthaltenden Polymere können als Additive für Detergenzien verwendet werden.

### Nähere Beschreibung der Erfindung

Kondensierte basische Aminosäuren enthaltende Polymere werden vorzugsweise durch thermische Kondensation von basischen Aminosäuren hergestellt. Andere Methoden zur Herstellung von basische Aminosäuren enthaltenden Polymeren beruhen auf chemischen Methoden (z.B. über N-Carbonsäureanhydride der basischen Aminosäuren) oder auf Mikroorganismen. Basische Aminosäuren, die im folgenden als Verbindungen der Gruppe (a) bezeichnet werden, sind Lysin, Arginin, Ornithin, Tryptophan und deren Mischungen. Diese Verbindungen können in Form ihrer Hydrate, ihrer Ester mit niederen Alkoholen oder ihrer Salze, beispielsweise ihrer Sulfate, Hydrochloride oder Acetate, eingesetzt werden. Die Ester der basischen Aminosäuren leiten sich vorzugsweise von einwertigen C1- bis C4-Alkoholen, wie z.B. Methanol, Ethanol, n-Propanol, Isopropanol, n-Butanol, sec.-Butanol oder tert.-Butanol ab. Bei Verwendung von Hydrochloriden sollte der Ansatz zur Neutralisation von Chlorwasserstoff mit ungefähr äquivalenten Mengen einer Base versetzt werden. Als Basen sind Natriumhydroxid und Kaliumhydroxid bevorzugt. Bei Verwendung eines Monohydrochlorids einer basischen Aminosäure ist ein Äquivalent einer Base erforderlich, wohingegen im Fall von Dihydrochloriden zwei Äquivalente erforderlich sind. Als basische Aminosäure verwendet man vorzugsweise Lysinhydrat und wäßrige Lysinlösungen. Man kann Lysin auch in Form seines cyclischen Lactams, d.h. a-Amino-ε-caprolactam, einsetzen.

Mit basischen Aminosäuren cokondensierbare Verbindungen, die im folgenden als Verbindungen der Gruppe (b) bezeichnet werden, sind beispielsweise Verbindungen mit mindestens einer Carboxylgruppe, Carbonsäureanhydride, Diketene, Amine, Lactame, Alkohole, alkoxylierte Alkohole und alkoxylierte Amine. Beispiele für carboxylgruppenhaltige Verbindungen sind gesättigte einbasische Carbonsäuren, ungesättigte einbasische Carbonsäuren, mehrbasische Carbonsäuren, Monohydroxycarbonsäuren, einbasische Polyhydroxycarbonsäuren, nicht-proteinogene Aminosäuren und deren Mischungen. Beispiele für gesättigte einbasische Carbonsäuren sind Ameisensäure, Essigsäure, Propionsäure, Buttersäure, Valeriansäure, Capronsäure, Octansäure, Nonansäure, Decansäure, Laurinsäure, Palmitinsäure, Stearinsäure, Arachidinsäure, Behensäure, Myristinsäure, Undecansäure, 2-Ethylhexansäure und alle natürlich vorkommende Fettsäuren und deren Mischungen.

Beispiele für ungesättigte einbasische Carbonsäuren sind Acrylsäure, Methacrylsäure, Crotonsäure, Sorbinsäure, Ölsäure, Linolsäure und Erucasäure.

Beispiele für mehrbasische Carbonsäuren sind Oxalsäure, Fumarsäure, Maleinsäure, Malonsäure, Bernsteinsäure, Itaconsäure, Adipinsäure, Aconitsäure, Suberinsäure, Azelainsäure, Pyridindicarbonsäure, Furandicarbonsäure, Phthalsäure, Terephthalsäure, Diglykolsäure, Glutarsäure, substituierte C4-Dicarbonsäure, Sulfobernsteinsäure, C1- bis C26-Alkylbernsteinsäuren, C2- bis C26-Alkenylbernsteinsäuren, 1,2,3-Propantricarbonsäuren, 1,1,3,3-Propantetracarbonsäuren, 1,1,2,2-Ethantetracarbonsäure, 1,2,3,4-Butantetracarbonsäure, 1,2,2,3-Propantetracarbonsäure, 1,3,3,5-Pentantetracarbonsäure, 1,2,4-Benzoltricarbonsäure und 1,2,4,5-Benzoltetracarbonsäure,

Beispiele für Monohydroxycarbonsäuren sind Äpfelsäure, Tartronsäure, Citronensäure und Isocitronensäure. Beispiele für Polyhydroxycarbonsäuren sind Weinsäure, Schleimsäure, Glycerinsäure, Bis(hydroxymethyl)propionsäure, Gluconsäure und hydroxylierte ungesättigte Fettsäuren, wie z.B. Dihydroxystearinsäure.

Weitere carboxylgruppenhaltige Verbindungen sind nicht-proteinogene Aminosäuren. Beispiele hierfür sind Anthranilsäure, N-Methylamino-substituierte Säuren wie N-Methylglycin, Dimethylaminoessigsäure, Ethanolaminoessigsäure, N-Carboxymethylaminosäuren, Nitrilotriessigsäure, Ethylendiaminessigsäure, Ethylendiamintetraessigsäure, Diethylentriaminpentaessigsäure, Hydroxyethylendiaminotriessigsäure, Diaminobernsteinsäure, C4-bis C26-Aminoalkylcarbonsäuren, wie z.B. 4-Aminobuttersäure, 6-Aminocapronsäure und 11-Aminoundecansäure.

Weitere carboxylgruppenhaltige Verbindungen, die sich von basischen Aminosäuren und α-Aminosäuren unterscheiden und die mit basischen Aminosäuren kondensiert werden können, sind Zuckercarbonsäuren, wie z.B. Gluconsäure, Glucarsäure, Gluconolacton und Glucuronsäure.

Als cokondensierbare Verbindungen eignen sich außerdem Carbonsäureanhydride, beispielsweise Bernsteinsäureanhydrid, Butantetracarbonsäuremonoanhydrid und -dianhydrid, Phthalsäureanhydrid, Acetylcitronensäureanhydrid, Maleinsäureanhydrid, Itaconsäureanhydrid und Aconitsäureanhydrid.

Beispiele für Diketene, die als cokondensierbare Verbindung in Betracht kommen, sind Alkyldiketene mit 1 bis 30 Kohlenstoffatomen in der Alkylgruppe. Diese Diketene lassen sich durch die folgende Formel charakterisieren 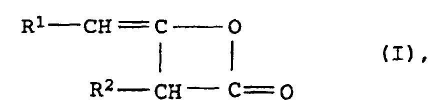 worin die Substituenten R¹ und R² gleich oder verschieden sind und für H, gesättigtes oder ethylenisch ungesättigtes C₁- bis C₃₀-Alkyl, vorzugsweise C₆ bis C₂₂-Alkyl stehen. Verbindungen der Formel (I) sind zum Beispiel Diketen, Methyldiketen, Hexyldiketen, Cyclohexyldiketen, Octyldiketen, Decyldiketen, Dodecyldiketen, Palmityldiketen, Stearyldiketen, Oleyldiketen, Octadecyldiketen, Eicosyldiketen, Docosyldiketen und Behenyldiketen.

Beispiele für Amine sind:
aliphatische und cycloaliphatische Amine, vorzugsweise Methylamin, Ethylamin, Propylamin, Butylamin, Pentylamin, Hexylamin, Heptylamin, Octylamin, Nonylamin, Decylamin, Undecylamin, Dodecylamin, Tridecylamin, Stearylamin, Palmitylamin, 2-Ethylhexylamin, Isononylamin, Hexamethylenimin, Dimethylamin, Diethylamin, Dipropylamin, Dibutylamin, Dihexylamin, Ditridecylamin, N-Methylbutylamin, N-Ethylbutylamin; alicyclische Amine, vorzugsweise Cyclopentylamin, Cyclohexylamin, N-Methylcyclohexylamin, N-Ethylcyclohexylamin, Dicyclohexylamin;
Diamine, Triamine und Tetraamine, vorzugsweise Ethylendiamin, Propylendiamin, Butylendiamin, Neopentyldiamin, Hexamethylendiamin, Octamethylendiamin, Imidazol, 5-Amino-1,3-trimethylcyclohexylmethylamin, Diethylentriamin, Dipropylentriamin, Tripropyltetraamin,
4,4'-Methylenbiscyclohexylamin, 4,4'-Methylenbis(2-methylcyclohexylamin), 4,7-Dioxadecyl-1,10-diamin, 4,9-Dioxadodecyl-1,12-diamin, 4,7,10-Trioxatridecyl-1,13-diamin, 2- (Ethylamino)ethylamin, 3-(Methylamino)propylamin, 3-(Cyclohexylamino)propylamin, 3-(2-Aminoethyl)aminopropylamin, 2-(Diethylamino)ethylamin, 3-(Dimethylamino)propylamin, Dimethyldipropylentriamin, 4-Aminomethyloctan-1,8-diamin, 3-(Diethylamino)propylamin, N,N-Diethyl-1,4-pentandiamin, Diethylentriamin, Dipropylentriamin, Bis(hexamethylen)triamin, Aminoethylpiperazin, Aminopropylpiperazin, N,N-Bis(aminopropyl)methylamin, N,N-Bis (aminopropyl)ethylamin, N,N-Bis(aminopropyl)hexylamin, N,N-Bis(aminopropyl)octylamin, N,N-Dimethyldipropylentriamin, N,N-Bis(3-dimethylaminopropyl)amin, N,N'1,2-Ethandiylbis(1,3-propandiamin), N-(Aminoethyl)piperazin, N-(2-Imidazol)piperazin, N-Ethylpiperazin, N-(Hydroxyethyl)piperazin, N-(Aminoethyl)piperazin, N-(Aminopropyl)piperazin, N-(Aminoethyl)morpholin, N-(Aminopropyl)morpholin, N- (Aminoethyl)imidazol, N-(Aminopropyl)imidazol, N-(Aminoethyl)hexamethylendiamin, N-(Aminopropyl)hexamethylendiamin, N-(Aminoethyl)ethylendiamin, N(Aminopropyl)ethylendiamin, N(Aminoethyl)butylendiamin, N(Aminopropyl)butylendiamin, Bis (aminoethyl)piperazin, Bis(aminopropyl)piperazin, Bis(aminoethyl)hexamethylendiamin, Bis(aminopropyl)hexamethylendiamin, Bis(aminoethyl)ethylendiamin, Bis(aminopropyl)ethylendiamin, Bis(aminoethyl)butylendiamin, Bis (aminopropyl)butylendiamin,
aliphatische Aminoalkohole, vorzugsweise 2-Aminoethanol, 3-Amino-1-propanol, 1-Amino-2-propanol, 2(2-Aminoethoxy)ethanol, 2-[2-Aminoethyl)amino]ethanol, 2-Methylaminoethanol, 2-(Ethylamino)ethanol, 2-Butylaminoethanol, Diethanolamin, 3-[(Hydroxyethyl)aminol-1-propanol, Diisopropanolamin, Bis(hydroxyethyl)aminoethylamin, Bis(hydroxypropyl)aminoethylamin, Bis(hydroxyethyl)aminopropylamin, Bis(hydroxypropyl)aminopropylamin;

Aminozucker, wie z.B. Chitosan oder Chitosamin sowie Verbindungen, die durch Reduktion von Kohlenhydraten mittels reduktiver Aminierung erhältlich sind, wie z.B. Aminosorbit oder Glucoseamin, und andere aminogruppenhaltige Verbindungen, wie z.B. Melamin, Harnstoff, Guanidin, Polyguanide, Piperidin, Morpholin, 2,6-Dimethylmorpholin und Tryptamin.

Bevorzugte Amine werden unter Hexamethylendiamin, Octylamin, Monoethanolamin, Octamethylendiamin, Diaminododecan, Decylamin, Dodecylamin und deren Mischungen ausgewählt.

Weitere mit basischen Aminosäuren cokondensierbare Verbindungen sind Lactame. Die Lactame enthalten beispielsweise 5 bis 13 Atome in dem Ring. Als Lactame eignen sich u.a. Butyrolactam, Caprolactam und Laurolactam.

Weitere mit basischen Aminosäuren cokondensierbare Verbindungen sind Alkohole. Die Alkohole können sich von einwertigen Alkoholen ableiten, wie beispielsweise von primären, sekundären oder tertiären Alkoholen mit 1 bis 22 Kohlenstoffatomen, z.B. Methanol, Ethanol, n-Propanol, Isopropanol, n-Butanol, Isobutanol, tert.-Butanol, Pentanol, Hexanol, 2-Ethylhexanol, Cyclohexanol, Octanol, Decanol, Dodecanol, Palmitylalkohol, Stearylalkohol und Behenylalkohol. Als Alkohole eignen sich ferner Polyole, wie z.B. Ethylenglykol, Propylenglykol, Glycerin, Polyglycerine mit 2 bis 8 Glycerineinheiten, Erythrit, Pentaerythrit und Sorbit.

Weitere cokondensierbare Verbindungen sind Kohlenhydrate, wie z.B. Glucose, Saccharose, Dextrine, Stärke und abgebaute Stärke sowie Maltose.

Die Alkohole können auch alkoxyliert sein. Beispiele für derartige Verbindungen sind die Additionsprodukte von 1 bis 200 Mol eines C₂- bis C₄-Alkylenoxids an ein Mol des erwähnten Alkohols. Als Alkylenoxide eignen sich beispielsweise Ethylenoxid, Propylenoxid und Butylenoxide. Vorzugsweise verwendet man Ethylenoxid und Propylenoxid oder man addiert Ethylenoxid und Propylenoxid in dieser oder in umgekehrter Reihenfolge an den Alkohol. Von besonderem Interesse sind die Additionsprodukte von 3 bis 20 Mol Ethylenoxid an 1 Mol eines C₁₃/C₁₅-Oxoalkohols oder an Fettalkohole. Die Alkohole können gegebenenfalls auch eine Doppelbindung enthalten, wie z.B. Oleylalkohol.

Die basischen Aminosäuren können auch mit alkoxylierten Aminen kondensiert werden, beispielsweise mit den Additionsprodukten von 5 bis 30 Mol Ethylenoxid an 1 Mol Stearylamin, Oleylamin oder Palmitylamin.

Die alkoxylierten, kondensierte Aminosäuren enthaltenden Polymere der Verbindungen der Gruppen (a) und (b) enthalten diese beispielsweise in einem molaren Verhältnis von 100 : 1 bis 1 : 10 und vorzugsweise in einem molaren Verhältnis von (a) zu (b) von mehr als 1, beispielsweise mehr als 1,5 und vorzugsweise mehr als 2. Enthalten Verbindungen (b) mindestens zwei verschiedene funktionelle Gruppen, so wird vorzugsweise ein molares Verhältnis (a) : (b) von 1 : 1 bis 1 : 10 verwendet. Beispiele für derartige Verbindungen (b) sind nicht-proteinogene Aminosäuren, Lactame, Aminoalkohole, Hydroxycarbonsäuren und Aminozucker.

Bevorzugte Kondensationsprodukte, die als Ausgangsmaterial für die Herstellung der alkoxylierten, kondensierte basische Aminosäuren enthaltenden Polymere verwendet werden, sind Homokondensate von basischen Aminosäuren und Cokondensate, die durch Kondensation von
(a) Lysin und
(b) mindestens einer Verbindung aus der Gruppe bestehend aus Palmitinsäure, Stearinsäure, Laurinsäure, Octansäure, Propionsäure, Essigsäure, 2-Ethylhexansäure, Adipinsäure, Bernsteinsäure, Citronensäure und deren Mischungen erhältlich sind, sowie

Kondensationsprodukte, die durch Kondensation von
(a) Lysin und
(b) mindestens einer Verbindung aus der Gruppe bestehend aus 1,6-Hexandiamin, Octylamin, Aminocapronsäure, Aminolaurinsäure, ε-caprolactam, Laurolactam und C₁₄/C₂₂-Alkyldiketenen erhältlich sind.

Um das Ausgangsmaterial für die Herstellung der alkoxylierten, kondensierte basische Aminosäuren enthaltenden Polymere zu erhalten, kann man die Kondensation der basischen Aminosäuren, ihrer Mischungen oder mindestens einer basischen Aminosäure mit mindestens einer cokondensierbaren Verbindung in Substanz, in einem organischen Lösungsmittel oder in wäßrigem Medium durchgeführen. Vorteilhafterweise führt man die Kondensation in Wasser bei einer Konzentration der zu kondensierenden Verbindungen von 10 bis 98 Gew.-% bei einer Temperatur von 120° bis 300°C durch. Nach einer bevorzugten Ausführungsform des Verfahrens führt man die Kondensation in Wasser bei einer Konzentration der zu kondensierenden Verbindungen von 20 bis 70 Gew.-% unter Druck bei einer Temperatur von 140° bis 250°C durch. Die Kondensation dieser Verbindungen kann jedoch auch in einem organischen Lösungsmittel, wie z.B. Dimethylformamid, Dimethylsulfoxid, Dimethylacetamid, Glykol, Polyethylenglykol, Propylenglykol, Polypropylenglykol, einwertigen Alkoholen, Additionsprodukten von Ethylenoxid und/oder Propylenoxid an einwertige Alkohole, an Amine oder an Carbonsäuren, durchgeführt werden. Einige dieser Lösungsmittel können mit den basischen Aminosäuren reagieren.

Man kann die Kondensation beispielsweise in Gegenwart von Wasser entweder in wäßriger Lösung oder in einem wasserhaltigen organischen Lösungsmittel starten. Die Kondensation der Verbindungen kann dann in Gegenwart von Wasser weitergeführt werden. Alternativ dazu kann man das Wasser vor der Kondensation der Verbindungen abdestillieren. Die Kondensation kann auch unter Entfernung von Wasser, das bei der Kondensation entsteht, durchgeführt werden. Vorzugsweise wird das bei der Kondensation entstehende Wasser aus dem Reaktionsgemisch entfernt. Dies kann unter erhöhtem Druck, Normaldruck oder vermindertem Druck durchgeführt werden. Die Kondensationsdauer hängt von der Wahl der Reaktionsbedingungen ab und liegt im allgemeinen im Bereich von 1 Minute bis 50 Stunden, vorzugsweise von 30 Minuten bis 16 Stunden. Polykondensate mit niedrigem Molekulargewicht können auch in einem druckdicht verschlossenen Behälter hergestellt werden, indem man das im Lauf der Polykondensation gebildete Wasser höchstens teilweise entfernt.

Gegebenenfalls kann die Kondensation auch in Gegenwart einer Mineralsäure als Katalysator durchgeführt werden. Die Mineralsäurekonzentration kann 0,001 bis 5, vorzugsweise 0,01 bis 1,0 Gew.-% betragen. Als Mineralsäuren eignen sich beispielsweise unterphosphorige Säure, Hypodiphosphorsäure, phosphorige Säure, Chlorwasserstoffsäure, Schwefelsäure und deren Mischungen. Neben den Säuren können auch deren Alkali-, Ammonium- und Erdalkalimetallsalze als Katalysator verwendet werden.

Die als Ausgangsmaterialien für die Herstellung der alkoxylierten, kondensierte basische Aminosäuren enthaltenden Polymere verwendeten Kondensationsprodukte von
- Homokondensaten basischer Aminosäuren
- Kondensaten von Gemischen aus zwei oder mehr basischen Aminosäuren und
- Cokondensaten von basischen Aminosäuren und cokondensierbaren Verbindungen
haben beispielsweise ein gewichtsmittleres Molekulargewicht Mw von 300 bis 1.000.000, vorzugsweise von 300 bis 20.000 und ganz besonders bevorzugt von 300 bis 2.000. Sie sind im allgemeinen wasserlöslich oder lassen sich leicht in Wasser dispergieren. Die Aminogruppen des Ausgangsmaterials können als freies Amin oder in Form ihrer Ammoniumsalze vorliegen, welche durch teilweise oder vollständige Neutralisation mit einer Mineralsäure, z.B. Chlorwasserstoffsäure, Phosphorsäure oder Schwefelsäure, oder mit einer organischen Säure, wie z.B. Methansulfonsäure, Essigsäure, Ameisensäure, Propionsäure oder Citronensäure, erhältlich sind.

Die kondensierte basische Aminosäuren enthaltenden Verbindungen, wie z.B.
- Homokondensate basischer Aminosäuren,
- Kondensate von Gemischen aus zwei oder mehr basischen Aminosäuren und
- Cokondensate aus basischen Aminosäuren und cokondensierbaren Verbindungen
werden durch Alkoxylierung so modifiziert, daß sie Einheiten von Alkylenoxiden aus der Gruppe bestehend aus C2- bis C30-Alkylenoxiden und Styroloxid enthalten. Die Alkylenoxide werden vorzugsweise aus der Gruppe bestehend aus Ethylenoxid, Propylenoxid, Butylenoxiden und deren Mischungen ausgewählt. Die alkoxylierten, kondensierte basische Aminosäuren enthaltenden Polymere enthalten pro Mol NH-Bindungen von primären und sekundären Aminogruppen des Ausgangsmaterials 0,1 bis 100, vorzugsweise 0,5 bis 30, Mol eines addierten, d.h. einkondensierten, Alkylenoxids. Ganz besonders bevorzugte Alkylenoxide sind Ethylenoxid, Propylenoxid und deren Mischungen. Ganz besonders bevorzugt sind Polymere, die 0,7 bis 2,5 oder 17 bis 25 Mol eines Alkylenoxids pro NH-Bindung enthalten.

Die Alkoxylierungsreaktion kann nach vorbekannten Methoden zur Modifizierung von Polyethylenimin einstufig oder zweistufig durchgeführt werden.

Bei einstufiger Verfahrensführung erhitzt man das Ausgangsmaterial (die oben beschriebenen kondensierte basische Aminosäuren enthaltenden Verbindungen) und mindestens eine wasserfreie Base unter Druck und in der Regel unter Stickstoff in einem Autoklaven zusammen mit einem Alkylenoxid bei Temperaturen zwischen 80 und 180°C, vorzugsweise von 100 bis 150°C. Wenn das Ausgangsmaterial und der basische Katalysator in wäßriger Lösung vorliegen, so wird Wasser abdestilliert, vorzugsweise unter vermindertem Druck, und der Rückstand vor der Alkoxylierung getrocknet. Die Wasserentfernung kann mittels azeotroper Destillation erfolgen, beispielsweise durch Zusatz eines Streckmittels, wie z.B. Benzol, Toluol oder Xylol.

Bei zweistufiger Verfahrensführung werden die NH-Gruppen des Ausgangsmaterials zunächst hydroxyalkyliert, indem man in der ersten Verfahrensstufe das Ausgangsmaterial mit 0,7 bis 1,2 Mol, vorzugsweise 0,85 bis 1,1 Mol, bezogen auf ein Mol N-H-Bindungen im Polymer, mindestens eines Alkylenoxids in wäßriger Lösung bei Temperaturen von 80 bis 140°C umsetzt. Das so erhaltene Reaktionsprodukt enthält 0,1 bis 1 Mol Alkylenoxideinheiten pro N-H-Bindung des Ausgangsmaterials und wird gegebenenfalls in der zweiten Verfahrensstufe mit mindestens einem Alkylenoxid zu alkoxylierten, kondensierte basische Aminosäuren enthaltenden Polymeren mit mehr als einem Mol, vorzugsweise 2 bis 100 Mol, Alkylenoxideinheiten pro N-H-Bindung im Polymer umgesetzt. Im zweiten Schritt erfolgt die Reaktion in Gegenwart eines alkalischen Katalysators und in Abwesenheit von Wasser bei Temperaturen von 100 bis 150°C. Die Alkoxylierung in der ersten Verfahrensstufe ist beispielsweise nach 1 bis 10 Stunden, vorzugsweise 1,5 bis 8 Stunden, vollständig. Die Reaktionsdauer in der zweiten Verfahrensstufe beträgt beispielsweise 2 bis 30 Stunden, vorzugsweise 3 bis 18 Stunden. Die Alkoxylierung in der ersten Verfahrensstufe erfolgt in der Regel unter Normaldruck, kann aber auch bei Drücken von bis zu 20 bar in einem Autoklaven erfolgen. Im einstufigen Verfahren und im zweiten Schritt des zweistufigen Verfahrens erfolgt die Alkoxylierung unter Drücken von mehr als 1 bar bis 20 bar und vorzugsweise bei 2 bis 10 bar.

Als alkalische Katalysatoren für die Alkoxylierung eignen sich beispielsweise Alkalimetallhydroxide, wie Natriumhydroxid und Kaliumhydroxid, Alkalimentallalkoholate, wie Natrium- oder Kaliummethanolat, Kaliumethanolat, Kaliumisopropanolat und Kalium-t-butylat. Anstelle der Kaliumsalze oder im Gemisch damit kann man auch die entsprechenden Natriumalkoholate einsetzen. Außerdem eignen sich Natriumhydrid und Hydrotalcit, der gegebenenfalls modifiziert sein kann, als Katalysator. Weitere Beispiele für alkalische Katalysatoren sind Calicumoxid oder Bariumoxid. Die Menge an alkalischem Katalysator beträgt beispielsweise 0,5 bis 20 Mol-%, vorzugsweise 1 bis 15 Mol-%, bezogen auf die N-H-Bindungen der kondensierte Aminosäuren enthaltenden Polymere. Die Alkoxylierung kann in einem Lösungsmittel erfolgen. Als Lösungsmittel eignen sich beispielsweise Wasser, Alkohole, wie Methanol, Ethanol, Isopropanol, n-Propanol und Isobutanol, sowie Kohlenwasserstoffe, wie Toluol und Xylol. Nach Abschluß der Reaktion entfernt man den Katalysator und das gegebenenfalls eingesetzte Lösungsmittel.

Zur Modifizierung kann man die alkoxylierten, kondensierte basische Aminosäuren enthaltenden Polymere mit einem Alkylierungsmittel aus der Gruppe bestehend aus Alkylhalogeniden, Benzylhalogeniden und Dialkylsulfaten umsetzen. Als Alkylhalogenide eignen sich beispielsweise C1- bis C22-Alkylhalogenide. Bevorzugte Alkylierungsmittel sind Benzylchlorid, Methylchlorid, Ethylchlorid, Laurylchlorid, Palmitylchlorid, Stearylchlorid, Methyliodid, Dimethylsulfat und Diethylsulfat.

Die alkoxylierten, kondensierte basische Aminosäuren enthaltenden Polymere sowie ihre alkylierten Derivate werden als Additive für Detergenzien verwendet.

Die erfindungsgemäßen alkoxylierten, kondensierte basische Aminosäuren enthaltenden Polymere haben im Vergleich zu den meisten kationischen Tensiden eine verminderte Algentoxizität.

Die gewichtsmittleren Molekulargewichte (Mw) wurden mit Hilfe der wäßrigen Gelpermeationschromatographie (GPC) unter Verwendung einer Mischung aus Acetonitril und Wasser im Volumenverhältnis von 20:80 als mobile Phase, Säulen mit Waters Ultrahydrogel 500, 250, 250 und 120 sowie UV-Detektion bei einer Wellenlänge von 230 nm bestimmt. Für die Kalibrierung wurden Pullulane-Standards mit engen Molekulargewichtsverteilungen verwendet.

Die Bestimmung des Aminfunktionalitätengehalts erfolgte durch potentiometrische Titration mit einer Standardlösung von alkoholischer Trifluormethansulfonsäure.

### Beispiele:

### Kondensat 1:

### Kondensationsprodukt von L-Lysin

L-Lysinmonohydrat (821 g, 5,0 Mol) und Natriumhypophosphit (0,1 g) wurden in eine 2,5-1-Druckapparatur eingefüllt und mit Stickstoff überlagert. Danach wurde die Apparatur druckdicht verschlossen und 6 h auf 170°C erhitzt, wobei der Innendruck auf 3,15 bar anstieg. Danach wurde zur Entfernung von Wasser aus dem Reaktionsgemisch langsam auf Normaldruck entspannt. Die Reaktionstemperatur wurde 0,5 h bei 170°C gehalten, um verbliebenes Lösungsmittel und flüchtige Produkte zu entfernen.

Die viskose Schmelze wurde auf 115°C abgekühlt und langsam mit 500 g Wasser versetzt, was eine klare gelbe Lösung ergab, die dann auf Raumtemperatur abgekühlt wurde. Die erhaltene Polymerlösung besaß einen Feststoffgehalt von 56,8%. Das Molekulargewicht Mw des Polymers betrug 1930 g/Mol.

### Kondensat 2:

### Kondensationsprodukt von L-Lysin

L-Lysinmonohydrat (985,2 g, 6,0 Mol) und Natriumhypophosphit (0,1 g) wurden in eine 2,5-1-Druckapparatur eingefüllt und mit Stickstoff überlagert. Danach wurde die Apparatur druckdicht verschlossen und 7 h auf 196°C erhitzt, wobei der Innendruck auf 11,55 bar anstieg. Danach wurde zur Entfernung von Wasser aus dem Reaktionsgemisch langsam auf Normaldruck entspannt. Die Reaktionstemperatur wurde 0,5 h bei 180°C gehalten, um verbliebenes Lösungsmittel und flüchtige Produkte zu entfernen. Die erhaltene viskose Schmelze wurde aus der Apparatur ausgetragen und dann auf Raumtemperatur abgekühlt. Das Molekulargewicht Mw des Polymers betrug 5820 g/Mol.

### Kondensat 3:

### Kondensationsprodukt von L-Lysin und Aminocapronsäure im molaren Verhältnis von 1:1

L-Lysinmonohydrat (656,8 g, 4,0 Mol), Aminocapronsäure (524,7 g, 4,0 Mol) und Natriumhypophospit (0,1 g) wurden in eine 2,5-1-Druckapparatur eingefüllt und mit Stickstoff überlagert. Danach wurde die Apparatur druckdicht verschlossen und 7 h auf 196°C erhitzt, wobei der Innendruck auf 7,65 bar anstieg. Danach wurde zur Entfernung von flüchtigen Stoffen aus dem Reaktionsgemisch langsam auf Normaldruck entspannt. Die erhaltene viskose Schmelze wurde aus der Apparatur ausgetragen und dann auf Raumtemperatur abgekühlt. Das Molekulargewicht Mw des Polymers betrug 3970 g/Mol.

### Kondensat 4:

### Kondensationsprodukt von L-Lysin und epsilon-Caprolactam im molaren Verhältnis von 1:1

L-Lysinmonohydrat (492,6 g, 3,0 Mol), epsilon-Caprolactam (339,5 g, 3,0 Mol) und Natriumhypophosphit (0,1 g) wurden in eine 2,5-1-Druckapparatur eingefüllt und mit Stickstoff überlagert. Danach wurde die Apparatur druckdicht verschlossen und 6 h auf 170°C erhitzt, wobei der Innendruck auf 2,1 bar anstieg. Danach wurde zur Entfernung von flüchtigen Substanzen aus dem Reaktionsgemisch langsam auf Normaldruck entspannt. Dann wurde die Reaktion 30 Min. bei 180°C und Normaldruck fortgesetzt. Die erhaltene viskose Schmelze wurde auf 90°C abgekühlt, aus der Apparatur ausgetragen und dann auf Raumtemperatur abgekühlt. Das Molekulargewicht Mw des Polymers betrug 4020 g/Mol.

### Kondensat 5:

### Kondensationsprodukt von L-Lysin und Hexamethylendiamin im molaren Verhältnis von 5:1

L-Lysinmonohydrat (492,6 g, 3,0 Mol), Hexamethylendiamin (69,6 g, 0,6 Mol) und Natriumhypophosphit (0,1 g) wurden in eine 2,5-1-Druckapparatur eingefüllt und mit Stickstoff überlagert. Danach wurde die Apparatur druckdicht verschlossen und 6 h auf 180°C erhitzt, wobei der Innendruck auf 4,1 bar anstieg. Danach wurde zur Entfernung von flüchtigen Substanzen aus dem Reaktionsgemisch langsam auf Normaldruck entspannt. Dann wurde die Reaktion 30 Min. bei 180°C und Normaldruck fortgesetzt. Die erhaltene viskose Schmelze wurde auf 90°C abgekühlt, aus der Apparatur ausgetragen und dann auf Raumtemperatur abgekühlt. Das Molekulargewicht Mw des Polymers betrug 5140 g/Mol.

### Beispiel 1:

### Polylysin·2EO

400 g einer 56,8%igen wäßrigen Lösung von Kondensat 1 wurden in eine 3,5-1-Druckapparatur eingefüllt und mit Stickstoff überlagert. Dann wurde die Apparatur druckdicht verschlossen und auf 120°C erhitzt. Dann wurden 100 g (2,27 Mol) Ethylenoxid zugesetzt, wobei der Innendruck auf 8,0 bar anstieg. Das Reaktionsgemisch wurde 2 h bei 120°C gehalten, auf Raumtemperatur abgekühlt und dann entspannt. Nach Abziehen von Lösungsmittel und flüchtigen Produkten unter Wasserstrahlpumpenvakuum wurden 317 g einer hochviskosen, orangefarbenen Lösung erhalten.

### Beispiel 2:

### Polylysin·20EO

150 g des Produkts gemäß Beispiel 1 und 5,3 g Kaliumhydroxid wurden vermischt und in eine 3,5-1-Druckapparatur eingefüllt. Dann wurde die Apparatur druckdicht verschlossen und auf 120°C erhitzt. Dann wurden innerhalb von 2 h 916 g (20,81 Mol) Ethylenoxid zugesetzt, wobei der Innendruck auf 8,0 bar anstieg. Das Reaktionsgemisch wurde 18 h bei 120°C gehalten und dann auf Raumtemperatur abgekühlt und entspannt. Nach Abziehen von Lösungsmittel und flüchtigen Produkten unter Wasserstrahlpumpenvakuum wurden 1051 g eines viskosen, dunkelorangefarbenen Öls erhalten.

### Beispiel 3:

### Polylysin·1PO

335,4 g Kondensat 2 wurden in 535 ml Methanol gelöst und in eine 3,5-1-Druckapparatur eingefüllt. Dann wurde die Apparatur mit Stickstoff gespült, druckdicht verschlossen und auf 100°C erhitzt. Dann wurden 87,4 g (1,51 Mol) Propylenoxid zugesetzt, wobei der Innendruck auf 4,6 bar anstieg. Das Reaktionsgemisch wurde 2 h bei 100°C gehalten, auf Raumtemperatur abgekühlt und dann entspannt, was 945,8 g einer dunkelorangefarbenen Lösung ergab.

### Beispiel 4

### Polylysin-co(Aminocapronsäure)-1,6 PO

300 g Kondensat 3 wurden in 300 ml Methanol gelöst, in eine 3,5-1-Druckapparatur eingefüllt und mit Stickstoff überlagert. Dann wurde die Apparatur druckdicht verschlossen und auf 100°C erhitzt. Dann wurden 115 g (1,98 Mol) Propylenoxid zugesetzt, wobei der Innendruck auf 4,6 bar anstieg. Das Reaktionsgemisch wurde 18 h bei 100°C gehalten, auf Raumtemperatur abgekühlt und dann entspannt. Nach Abziehen von Lösungsmittel und flüchtigen Produkten unter Wasserstrahlpumpenvakuum wurden 374 g eines dunkelorangefarbenen, hochviskosen Öls erhalten.

### Beispiel 5

Polylysin-co(Caprolactam)·2EO
850 g einer 63,9%igen wäßrigen Lösung von Kondensat 4 wurden in eine 3,5-1-Druckapparatur eingefüllt und mit Stickstoff überlagert. Dann wurde die Apparatur druckdicht verschlossen und auf 120°C erhitzt. Dann wurden 187,8 g (4,27 Mol) Ethylenoxid zugegeben, wobei der Innendruck auf 8,0 bar anstieg. Das Reaktionsgemisch wurde 2 h bei 120°C gehalten, auf Raumtemperatur abgekühlt und dann entspannt. Nach Abziehen von Lösungsmittel und flüchtigen Produkten unter Wasserstrahlpumpenvakuum wurden 710 g eines hellorangefarbenen, hochviskosen Öls erhalten.

### Beispiel 6

### Polylysin-co(Hexamethylendiamin)·2EO

250 g Kondensat 5 wurden in 300 ml Methanol gelöst, in eine 3,5-1-Druckapparatur eingefüllt und mit Stickstoff überlagert. Dann wurde die Apparatur druckdicht verschlossen und auf 120°C erhitzt. Dann wurden 176,2 g (4,0 Mol) Ethylenoxid zugesetzt, wobei der Innendruck auf 7,0 bar anstieg. Das Reaktionsgemisch wurde 2 h bei 120°C gehalten, auf Raumtemperatur abgekühlt und dann entspannt. Nach Abziehen von Lösungsmittel und flüchtigen Produkten unter Wasserstrahlpumpenvakuum wurden 401 g eines bräunlichen, hochviskosen Öls erhalten.

### Beispiel 7

### Modifizierung von Polylysin-co(Caprolactam)·2EO mit Dimethylsulfat

150 g einer 49,2%igen wäßrigen Lösung des Polymers gemäß Beispiel 5 wurden in einen Dreihalskolben mit Stickstoffeinleitung, Rückflußkühler, Tropftrichter und Magnetrührer eingefüllt. Die Lösung wurde unter Stickstoff auf 70°C erhitzt und langsam mit 9,64 g Dimethylsulfat versetzt. Es wurde noch 2 h weitergerührt, wobei der pH-Wert durch Zutropfen von 1,3 g 25%iger Natronlauge bei 8,0 gehalten wurde. Nach Abkühlen auf Raumtemperatur wurde eine hellorangefarbene Lösung mit einem Feststoffgehalt von 56,8% erhalten.

### Beispiel 8

### Modifizierung von Polylysin-co(Caprolactam)·2EO mit Dimethylsulfat

150 g einer 49,2%igen wäßrigen Lösung des Polymers gemäß Beispiel 5 wurden in einen Dreihalskolben mit Stickstoffeinleitung, Rückflußkühler, Tropftrichter und Magnetrührer eingefüllt. Die Lösung wurde unter Stickstoff auf 75°C erhitzt und langsam mit 5,35 g Dimethylsulfat versetzt. Es wurde noch 2 h weitergerührt, wobei der pH-Wert durch Zutropfen von 0,7 g 25%iger Natronlauge bei 8,0 gehalten wurde. Nach Abkühlen auf Raumtemperatur wurde eine hellorangefarbene Lösung mit einem Feststoffgehalt von 46,2% erhalten.

### Beispiel 9

### Modifizierung von Polylysin-co(Caprolactam)·2EO mit Benzylchlorid

150 g einer 49,2%igen wäßrigen Lösung des Polymers gemäß Beispiel 5 wurden in einen Dreihalskolben mit Stickstoffeinleitung, Rückflußkühler, Tropftrichter und Magnetrührer eingefüllt. Die Lösung wurde unter Stickstoff auf 70°C erhitzt und langsam mit 9,68 g Benzylchlorid versetzt. Es wurde noch 2 h weitergerührt, wobei der pH-Wert durch Zutropfen von 4,1 g 25%iger Natronlauge bei 8,0 gehalten wurde. Nach Abkühlen auf Raumtemperatur wurde eine hellorangefarbene Lösung mit einem Feststoffgehalt von 49,9% erhalten.

### Beispiel 10

### Modifizierung von Polylysin-co(Caprolactam)·2EO mit Benzylchlorid

150 g einer 49,2%igen wäßrigen Lösung des Polymers gemäß Beispiel 5 wurden in einen Dreihalskolben mit Stickstoffeinleitung, Rückflußkühler, Tropftrichter und Magnetrührer eingefüllt. Die Lösung wurde unter Stickstoff auf 70°C erhitzt und langsam mit 5,38 g Benzylchlorid versetzt. Es wurde noch 2 h weitergerührt, wobei der pH-Wert durch Zutropfen von 2,7 g 25%iger Natronlauge bei 8,0 gehalten wurde. Nach Abkühlen auf Raumtemperatur wurde eine hellorangefarbene Lösung mit einem Feststoffgehalt von 46,2% erhalten.

## Patentansprüche

1. Alkoxylierte, kondensierte basische Aminosäuren enthaltende Polymere, bei denen es sich um die Additionsprodukte von Alkylenoxiden aus der Gruppe bestehend aus C2- bis C30-Alkylenoxiden und Styroloxid an
- Homokondensate basischer Aminosäuren,
- Kondensate von Gemischen aus zwei oder mehr basischen Aminosäuren und
- Cokondensate aus basischen Aminosäuren und cokondensierbaren Verbindungen
handelt.

2. Alkoxylierte, kondensierte basische Aminosäuren enthaltende Polymere nach Anspruch 1 **dadurch gekennzeichnet, daß** die basischen Aminosäuren aus der Gruppe bestehend aus Lysin, Arginin, Ornithin und Tryptophan ausgewählt sind.

3. Alkoxylierte, kondensierte basische Aminosäuren enthaltende Polymere nach Anspruch 1, **dadurch gekennzeichnet, daß** es sich bei der basischen Aminosäure um Lysin handelt.

4. Alkoxylierte, kondensierte basische Aminosäuren enthaltende Polymere nach Anspruch 1, **dadurch gekennzeichnet, daß** die cokondensierbaren Verbindungen aus der Gruppe bestehend aus carbonsäuregruppenhaltigen Verbindungen, Carbonsäureanhydriden, Diketenen, Aminen, Lactamen, Alkoholen, alkoxylierten Alkoholen und alkoxylierten Aminen ausgewählt sind.

5. Alkoxylierte, kondensierte basische Aminosäuren enthaltende Polymere nach Anspruch 1, **dadurch gekennzeichnet, daß** die kondensierte basische Aminosäuren enthaltenden Polymere durch Kondensation von
(a) Lysin, gegebenenfalls zusammen mit
(b) mindestens einer Verbindung aus der Gruppe bestehend aus Palmitinsäure, Stearinsäure, Laurinsäure, Octansäure, Propionsäure, Essigsäure, 2-Ethylhexansäure, Adipinsäure, Bernsteinsäure, Citronensäure und deren Mischungen,
erhältlich sind.

6. Alkoxylierte, kondensierte basische Aminosäuren enthaltende Polymere nach Anspruch 1, **dadurch gekennzeichnet, daß** die kondensierte basische Aminosäuren enthaltenden Polymere durch Kondensation von
(a) Lysin mit
(b) mindestens einer Verbindung aus der Gruppe bestehend aus 1,6-Hexandiamin, Octylamin, Aminocapronsäure, Aminolaurinsäure, ε-Caprolactam, Laurolactam und C14-/C22-Alkyldiketenen
erhältlich sind.

7. Alkoxylierte, kondensierte basische Aminosäuren enthaltende Polymere nach Anspruch 1, **dadurch gekennzeichnet, daß** die kondensierte basische Aminosäuren enthaltenden Polymere ein gewichtsmittleres Molekulargewicht von 300 bis 1.000.000 aufweisen.

8. Alkoxylierte, kondensierte basische Aminosäuren enthaltende Polymere nach Anspruch 1, **dadurch gekennzeichnet, daß** sie Einheiten von Alkylenoxiden aus der Gruppe bestehend aus C2-bis C30-Alkylenoxiden und Styroloxid enthalten.

9. Alkoxylierte, kondensierte basische Aminosäuren enthaltende Polymere nach Anspruch 1, **dadurch gekennzeichnet, daß** sie Einheiten von Alkylenoxiden aus der Gruppe bestehend aus Ethylenoxid, Propylenoxid, Butylenoxiden und deren Mischungen enthalten.

10. Alkoxylierte, kondensierte basische Aminosäuren enthaltende Polymere nach Anspruch 1, **dadurch gekennzeichnet, daß** die kondensierte basische Aminosäuren enthaltenden Polymere pro Mol NH-Bindungen von primären und sekundären Aminogruppen 0,1 bis 100 Mol eines Alkylenoxids einkondensiert enthalten.

11. Alkoxylierte, kondensierte basische Aminosäuren enthaltende Polymere nach Anspruch 1, **dadurch gekennzeichnet, daß** die kondensierte basische Aminosäuren enthaltenden Polymere pro Mol NH-Bindungen von primären und sekundären Aminogruppen 0,5 bis 20 Mol eines Alkylenoxids einkondensiert enthalten.

12. Alkoxylierte, kondensierte basische Aminosäuren enthaltende Polymere nach Anspruch 1, **dadurch gekennzeichnet, daß** sie Einheiten von Alkylenoxiden aus der Gruppe bestehend aus Ethylenoxid, Propylenoxid und deren Mischungen enthalten.

13. Alkoxylierte, kondensierte, Aminosäuren enthaltende Polymere nach Anspruch 6, **dadurch gekennzeichnet, daß** das molare Verhältnis von (a) zu (b) sich auf 100 : 1 bis 1 : 10 beläuft.

14. Alkoxylierte, kondensierte, Aminosäuren enthaltende Polymere nach Anspruch 6, **dadurch gekennzeichnet, daß** das molare Verhältnis von (a) zu (b) größer als 1 ist.

15. Alkoxylierte, kondensierte basische Aminosäuren enthaltende Polymere nach Anspruch 1, **dadurch gekennzeichnet, daß** sie durch Umsetzung mit einem Alkylierungsmittel aus der Gruppe bestehend aus Alkylhalogeniden, Benzylhalogeniden und Dialkylsulfaten modifiziert worden sind.

16. Verfahren zur Herstellung von alkoxylierten, kondensierten, basische Aminosäuren enthaltenden Polymeren, **dadurch gekennzeichnet, daß** man
- Homokondensate basischer Aminosäuren,
- Kondensate von Gemischen aus zwei oder mehr basischen Aminosäuren und/oder
- Cokondensate aus basischen Aminosäuren und cokondensierbaren Verbindungen
mit mindestens einem Alkylenoxid aus der Gruppe bestehend aus C2- bis C30-Alkylenoxiden und Styroloxid umsetzt.

17. Verfahren nach Anspruch 16, **dadurch gekennzeichnet, daß** man die Alkylenoxide aus der Gruppe bestehend aus Ethylenoxid, Propylenoxid und Butylenoxid auswählt.

18. Verfahren nach Anspruch 16, **dadurch gekennzeichnet, daß** man als Alkylenoxid Ethylenoxid einsetzt.

19. Verfahren nach Anspruch 16, **dadurch gekennzeichnet, daß** man die Polymere mit einem Alkylierungsmittel aus der Gruppe bestehend aus Alkylhalogeniden, Benzylhalogeniden und Dialkylsulfaten alkyliert.

20. Verfahren nach Anspruch 16, **dadurch gekennzeichnet, daß** man die Polymere mit einer Verbindung aus der Gruppe bestehend aus Benzylchlorid, Methylchlorid, Ethylchlorid, Laurylchlorid, Palmitylchlorid, Stearylchlorid, Methyliodid, Dimethylsulfat und Diethylsulfat alkyliert.

## Claims

1. An alkoxylated, condensed basic amino acid-containing polymer comprising the addition products of alkylene oxides selected from the group consisting of C₂- to C₃₀-alkylene oxides and styrene oxide with
- homocondensates of basic amino acids,
- condensates of mixtures of two or more basic amino acids and
- cocondensates of basic amino acids and cocondensable compounds.

2. An alkoxylated, condensed basic amino acid-containing.polymer as claimed in claim 1, wherein the basic amino acids are selected from the group consisting of lysine, arginine, ornithine and tryptophan.

3. An alkoxylated, condensed basic amino acid-containing polymer as claimed in claim 1, wherein the basic amino acid is lysine.

4. An alkoxylated, condensed basic amino acid-containing polymer as claimed in claim 1, wherein the cocondensable compounds are selected from the group consisting of compounds containing carboxylic acid groups, carboxylic anhydrides, diketenes, amines, lactams, alcohols, alkoxylated alcohols and alkoxylated amines.

5. An alkoxylated, condensed basic amino acid-containing polymer as claimed in claim 1, wherein the condensed basic amino acid-containing polymers are obtainable by condensing
(a) lysine alone or together with
(b) at least one compound selected from the group consisting of palmitic acid, stearic acid, lauric acid, octanoic acid, propionic acid, acetic acid, 2-ethylhexanoic acid, adipic acid, succinic acid, citric acid and mixtures thereof.

6. An alkoxylated, condensed basic amino acid-containing polymer as claimed in claim 1, wherein the condensed basic amino acid-containing polymer is obtainable by condensing
(a) lysine together with
(b) at least one compound selected from the group consisting of 1,6-hexandiamine, octylamine, aminocaproic acid, aminolauric acid, ε-caprolactam, laurolactam, and C₁₄-/C₂₂-alkyldiketenes.

7. An alkoxylated, condensed basic amino acid-containing polymer as claimed in claim 1, wherein the condensed basic amino acid-containing polymer has a weight average molecular weight of from 300 to 1,000,000.

8. An alkoxylated, condensed basic amino acid-containing polymer as claimed in claim 1, comprising units of alkylene oxides selected from the group consisting of C₂- to C₃₀-alkylene oxides and styrene oxide.

9. An alkoxylated, condensed basic amino acid-containing polymer as claimed in claim 1, comprising units of alkylene oxides selected from the group consisting of ethylene oxide, propylene oxide, butylene oxides and mixtures thereof.

10. An alkoxylated, condensed basic amino acid-containing polymer as claimed in claim 1, wherein the condensed basic amino acid-containing polymer contains per mole of NH bonds of primary and secondary amino groups 0.1 to 100 mol of an alkylene oxide in condensed form.

11. An alkoxylated, condensed basic amino acid-containing polymer as claimed in claim 1, wherein the condensed basic amino acid-containing polymer contains per mole of NH bonds of primary and secondary amino groups 0.5 to 20 mol of an alkylene oxide in condensed form.

12. An alkoxylated, condensed basic amino acid-containing polymer as claimed in claim 1, comprising units of alkylene oxides selected from the group consisting of ethylene oxide, propylene oxide and mixtures thereof.

13. An alkoxylated, condensed amino acid-containing polymer as claimed in claim 6, wherein the molar ratio of (a) to (b) is from 100 : 1 to 1 : 10.

14. An alkoxylated, condensed amino acid-containing polymer as claimed in claim 6, wherein the molar ratio of (a) to (b) is greater than 1.

15. An alkoxylated, condensed basic amino acid-containing polymer as claimed in claim 1, which has been modified by reacting it with an alkylating agent selected from the group consisting of alkyl halides, benzyl halides and dialkyl sulfates.

16. A process for the production of alkoxylated, condensed basic amino acid-containing polymers, which comprises reacting
- homocondensates of basic amino acids,
- condensates of mixtures of two or more basic amino acids and/or
- cocondensates of basic amino acids and cocondensable compounds
with at least one alkylene oxide selected from the group consisting of C₂- to C₃₀-alkylene oxides and styrene oxide.

17. A process as claimed in claim 16, wherein the alkylene oxides are selected from the group consisting of ethylene oxide, propylene oxide and butylene oxide.

18. A process as claimed in claim 16, wherein the alkylene oxide is ethylene oxide.

19. A process as claimed in claim 16, wherein the polymers are alkylated with an alkylating agent selected from the group consisting of alkyl halides, benzyl halides and dialkyl sulfates.

20. A process as claimed in claim 16, wherein the polymers are alkylated with a compound selected from the group consisting of benzyl chloride, methyl chloride, ethyl chloride, lauryl chloride, palmityl chloride, stearyl chloride, methyl iodide, dimethyl sulfate and diethyl sulfate.

## Revendications

1. Polymères alcoxylés, contenant des acides aminés basiques condensés, qui sont les produits de l'addition d'oxydes d'alkylène, du groupe formé par les oxydes d'alkylène en C₂ à C₃₀ et l'oxyde de styrène, à :
- des homo-condensats d'acides aminés basiques,
- des condensats de mélanges de deux ou de plusieurs acides aminés basiques, et à
- des co-condensats constitués d'acides aminés basiques et de composés co-condensables.

2. Polymères alcoxylés, contenant des acides aminés basiques condensés selon la revendication 1, **caractérisés en ce que** les acides aminés basiques sont choisis dans le groupe formé par la lysine, l'arginine, l'ornithine et le tryptophane.

3. Polymères alcoxylés, contenant des acides aminés basiques condensés selon la revendication 1, **caractérisés en ce qu'**il s'agit, concernant les acides aminés basiques, de la lysine.

4. Polymères alcoxylés, contenant des acides aminés basiques condensés selon la revendication 1, **caractérisés en ce que** les composés co-condensables sont choisis dans le groupe formé par les composés contenant des groupes acide carboxylique, les anhydrides d'acides carboxyliques, les dicétènes, les amines, les lactames, les alcools, les alcools alcoxylés et les amines alcoxylées.

5. Polymères alcoxylés, contenant des acides aminés basiques condensés selon la revendication 1, **caractérisés en ce que** l'on obtient les polymères contenant des acides aminés basiques condensés par condensation de
(a) lysine, éventuellement avec
(b) au moins un composé du groupe formé par l'acide palmitique, l'acide stéarique, l'acide laurique, l'acide octanoïque, l'acide propionique, l'acide acétique, l'acide 2-éthylhexanoïque, l'acide adipique, l'acide succinique, l'acide citrique et leurs mélanges.

6. Polymères alcoxylés, contenant des acides aminés basiques condensés selon la revendication 1, **caractérisés en ce que** l'on obtient les polymères contenant des acides aminés basiques condensés par condensation de
(a) lysine avec
(b) au moins un composé du groupe formé par la 1,6-hexanediamine, l'octylamine, l'acide aminocaproïque, l'acide aminolaurique, l'**g**-caprolactame, le laurolactame et les (alkyle en C₁₄ à C₂₂)dicétènes.

7. Polymères alcoxylés, contenant des acides aminés basiques condensés selon la revendication 1, **caractérisés en ce que** les polymères contenant des acides aminés basiques condensés présentent une masse moléculaire moyenne en masse comprise entre 300 et 1 000 000.

8. Polymères alcoxylés, contenant des acides aminés basiques condensés selon la revendication 1, **caractérisés en ce qu'**ils contiennent des motifs d'oxydes d'alkylène du groupe formé par les oxydes d'alkylène en C₂ à C₃₀ et l'oxyde de styrène.

9. Polymères alcoxylés, contenant des acides aminés basiques condensés selon la revendication 1, **caractérisés en ce qu'**ils contiennent des motifs d'oxydes d'alkylène du groupe formé par l'oxyde d'éthylène, l'oxyde de propylène, l'oxyde de butylène et leurs mélanges.

10. Polymères alcoxylés, contenant des acides aminés basiques condensés selon la revendication 1, **caractérisés en ce que** les polymères contenant des acides aminés basiques condensés contiennent, par mole de liaisons NH de groupes amino primaires et secondaires, 0,1 à 100 moles d'un oxyde d'alkylène condensé.

11. Polymères alcoxylés, contenant des acides aminés basiques condensés selon la revendication 1, **caractérisés en ce que** les polymères contenant des acides aminés basiques condensés contiennent, par mole de liaisons NH de groupes amino primaires et secondaires, 0,5 à 20 moles d'un oxyde d'alkylène condensé.

12. Polymères alcoxylés, contenant des acides aminés basiques condensés selon la revendication 1, **caractérisés en ce qu'**ils contiennent des motifs d'oxydes d'alkylène du groupe formé par l'oxyde d'éthylène, l'oxyde de propylène et leurs mélanges.

13. Polymères alcoxylés, contenant des acides aminés condensés selon la revendication 6, **caractérisés en ce que** le rapport molaire de (a) à (b) est de 100:1 à 1:10.

14. Polymères alcoxylés, condensés, contenant des acides aminés selon la revendication 6, **caractérisés en ce que** le rapport molaire de (a) à (b) est supérieur à 1.

15. Polymères alcoxylés, contenant des acides aminés basiques condensés selon la revendication 1, **caractérisés en ce qu'**ils sont modifiés par réaction avec un agent d'alkylation du groupe formé par les halogénures d'alkyle, les halogénures de benzyle et les sulfates de dialkyle.

16. Procédé de préparation de polymères alcoxylés, contenant des acides aminés basiques condensés, **caractérisés en ce que** l'on fait réagir :
- des homocondensats d'acides aminés basiques
- des condensats de mélanges de deux ou de plusieurs acides aminés basiques, et/ou
- des co-condensats constitués d'acides aminés basiques et de composés co-condensables,
avec au moins un oxyde d'alkylène du groupe formé par les oxydes d'alkylène en C₂ à C₃₀ et l'oxyde de styrène.

17. Procédé selon la revendication 16, **caractérisé en ce que** l'on choisit les oxydes d'alkylène dans le groupe formé par l'oxyde d'éthylène, l'oxyde de propylène et l'oxyde de butylène.

18. Procédé selon la revendication 16, **caractérisé en ce que** l'on utilise l'oxyde d'éthylène en tant qu'oxyde d'alkylène.

19. Procédé selon la revendication 16, **caractérisé en ce que** l'on alkyle les polymères à l'aide d'un agent d'alkylation du groupe formé par les halogénures d'alkyle, les halogénures de benzyle et les sulfates de dialkyle.

20. Procédé selon la revendication 16, **caractérisé en ce que** l'on alkyle les polymères avec un composé du groupe formé par le chlorure de benzyle, le chlorure de méthyle, le chlorure d'éthyle, le chlorure de lauryle, le chlorure de palmityle, le chlorure de stéaryle, l'iodure de méthyle, le sulfate de diméthyle et le sulfate de diéthyle.
